# EUROPÄISCHE PATENTSCHRIFT

(11) **EP 2 178 731 B1**
(45) Veröffentlichungstag und Bekanntmachung des Hinweises auf die Patenterteilung: **26.09.2012**
(21) Anmeldenummer: 08802976.4
(22) Anmeldetag: 08.08.2008
(51) Int. Cl.: F16H 61/04, F16H 61/684, B60K 6/48, B60W 10/11, B60W 30/19, B60W 10/10, B60W 10/08, B60W 20/00, B60W 10/06

(54) **VERFAHREN ZUR DURCHFÜHRUNG EINER LASTSCHALTUNG BEI PARALLELEN HYBRIDFAHRZEUGEN IM HYBRIDBETRIEB**
METHOD FOR CARRYING OUT A LOAD SHIFT IN A PARALLEL HYBRID VEHICLE DURING HYBRID OPERATION
PROCÉDÉ POUR EFFECTUER UN CHANGEMENT DE VITESSE EN CHARGE LORS DU FONCTIONNEMENT HYBRIDE POUR DES VÉHICULES HYBRIDES PARALLÈLES

(30) Priorität: 16.08.2007 DE 102007038774
(43) Veröffentlichungstag der Anmeldung: 28.04.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, 6900 Bregenz (AT)
(86) Internationale Anmeldenummer: PCT/EP2008/060442
(87) Internationale Veröffentlichungsnummer: WO 2009/021915

(56) Entgegenhaltungen:
- EP-A- 1 167 834
- EP-A- 1 450 074
- EP-A- 1 744 083
- WO-A-00/03163
- DE-C1- 19 631 983
- FR-A- 2 796 437

## Beschreibung

Die vorliegende Erfindung bezieht sich auf ein Verfahren zur Durchführung einer Lastschaltung bei parallelen Hybridfahrzeugen im Hybridbetrieb gemäß dem Oberbegriff des Patentanspruchs 1.

Aus dem Stand der Technik sind Hybridfahrzeuge umfassend ein Hybridgetriebe bekannt. Sie umfassen zusätzlich zu dem Verbrennungsmotor zumindest einen Elektromotor bzw. eine elektrische Maschine. Bei seriellen Hybridfahrzeugen wird ein Generator vom Verbrennungsmotor angetrieben, wobei der Generator den die Räder antreibenden Elektromotor mit elektrischer Energie versorgt. Des weiteren sind parallele Hybridfahrzeuge bekannt, bei denen eine Addition der Drehmomente des Verbrennungsmotors und zumindest einer mit dem Verbrennungsmotor verbindbaren elektrischen Maschine erfolgt. Hierbei sind die elektrischen Maschinen mit dem Riementrieb oder mit der Kurbelwelle des Verbrennungsmotors verbindbar. Die vom Verbrennungsmotor und/oder der zumindest einen elektrischen Maschine erzeugten Drehmomente werden über ein nachgeschaltetes Getriebe an die angetriebene Achse übertragen.

Das gattungsbildende Dokument EP 1 167 834 offenbart ein Verfahren zur Durchführung einer Schaltung bei parallelen Hybridfahrzeug mit den Merkmalen des Oberbegriffs von Anspruch 1.

Beispielsweise ist im Rahmen der DE102006019679 A1 ein Antriebsstrang mit einem elektrisch verstellbaren Hybridgetriebe und einem elektrohydraulischen Steuersystem, mehreren elektrischen Leistungseinheiten und mehreren Drehmomentübertragungsmechanismen bekannt. Hierbei können die Drehmomentübertragungsmechanismen durch das elektrohydraulische Steuersystem selektiv eingerückt werden, um vier Vorwärtsgänge, einen neutralen Zustand, eine elektrische Betriebsart mit niedriger und hoher Drehzahl, eine elektrisch verstellbare Betriebsart mit niedriger und hoher Drehzahl und eine Berghalte-Betriebsart bereitzustellen.

Aus der DE 102005057607 B3 ist ein Hybridantrieb für Fahrzeuge bekannt, zumindest beinhaltend einen Hauptmotor, insbesondere eine Brennkraftmaschine, einen Generator, einen Elektromotor und ein, ein Sonnenrad, ein Hohlrad, einen Planetenträger sowie Planetenräder aufweisendes Planetengetriebe, das mindestens eine Abtriebswelle beinhaltet. Hierbei ist vorgesehen, dass für einen ersten Fahrbereich des Fahrzeuges zur Addition der Drehmomente die Antriebswellen des Hauptmotors und des Elektromotors auf das Sonnenrad des Planetengetriebes gekoppelt sind und für einen weiteren Fahrbereich einer der beiden Motoren zur mechanischen Addition der Drehzahlen entsprechend dem Überlagerungsprinzip kraftschlüssig auf das Hohlrad des Planetengetriebes koppelbar ist.

Bei einer nach dem Stand der Technik durchgeführten Lastschaltung erfolgt die zur Synchronisierung auf den neuen Gang erforderliche Drehzahlanpassung des Motors mit Hilfe der beteiligten Schaltelemente und eines Motor-Momenteingriffes.

Beispielsweise wird bei einer Zughochschaltung zunächst die Übertragungsfähigkeit des zuschaltenden Schaltelementes zur Lastübernahme erhöht und gleichzeitig die Übertragungsfähigkeit des abschaltenden Schaltelementes verringert, wobei nach erfolgter Lastübernahme durch das zuschaltende Schaltelement eine Drehzahlanpassung des Motors mit Hilfe der Schaltelemente und eines Motor-Momenteingriffes erfolgt. Bei einer Lastschaltung im Hybridbetrieb eines Hybridfahrzeuges wird der Motor aus dem Verbrennungsmotor und der elektrischen Maschine gebildet. Anschließend wird das abschaltende Schaltelement vollständig geöffnet und das zuschaltende Schaltelement vollständig geschlossen.

Nach dem Stand der Technik bleiben Verbrennungsmotor und elektrische Maschine bei derartigen Lastschaltungen während der Schaltung unter Vorgabe eines Fahrsollmomentes momentgeführt und es erfolgt ein Momenteingriff seitens der Schaltablaufsteuerung, wobei der Momenteingriff auf Verbrennungsmotor und elektrische Maschine aufgeteilt wird.

Der vorliegenden Erfindung liegt die Aufgabe zugrunde, ein Verfahren zur Durchführung einer Lastschaltung bei parallelen Hybridfahrzeugen im Hybridbetrieb anzugeben, durch dessen Durchführung die Schaltzeiten verkürzt und der Schaltkomfort erhöht wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, die zur Synchronisierung auf den neuen Gang erforderliche Drehzahlanpassung der elektrischen Maschine und des Verbrennungsmotors durch eine Drehzahlanpassung der elektrischen Maschine in einem Drehzahlregelmodus durchzuführen, wobei die elektrische Maschine drehzahlgeregelt auf die Zieldrehzahl bzw. die Anschlussdrehzahl (Synchrondrehzahl) des neuen Ganges geführt wird, so dass das zuschaltende Schaltelement synchronisiert wird. Da die elektrische Maschine mit dem Verbrennungsmotor gekoppelt ist, wird durch die erfindungsgemäße Drehzahlanpassung der elektrischen Maschine in einem Drehzahlregelmodus auch die Drehzahl des Verbrennungsmotors angepasst.

Gemäß der Erfindung wird am Verbrennungsmotor nur dann ein Momenteingriff durchgeführt, wenn die elektrische Maschine nicht genug Moment aufbringen kann, um der gewünschten Drehzahländerung bzw. dem Solldrehzahlverlauf zu folgen.

Der Drehzahlverlauf ist erfindungsgemäß derart gestaltet, dass die Drehzahl der elektrischen Maschine mit einem geringen Gradienten auf die Zieldrehzahl einläuft. Die zur elektrischen Maschine hin wirkenden Momente der Schaltelemente und des Verbrennungsmotors dienen in vorteilhafter Weise als Vorsteuerung für die Drehzahlregelung an der elektrischen Maschine.

Während dieser Drehzahlregelphase bestimmen die Momente an den Schaltelementen das Abtriebsmoment, da sie sich im Schlupf befinden und dem Fahrsollmoment nachgeführt werden.

Wenn die Drehzahl der elektrischen Maschine die Zieldrehzahl bzw. die Synchrondrehzahl des zuschaltenden Ganges erreicht, wird die elektrische Maschine wieder in den momentengeregelten Modus überführt und das zuschaltende Schaltelement vollständig geschlossen. Nach Abschluss der Lastschaltung sind der Verbrennungsmotor und die elektrische Maschine über den neuen Getriebegang mit dem Abtrieb des Getriebes gekoppelt.

Durch die erfindungsgemäße Konzeption werden die Schaltzeiten verkürzt, da eine elektrische Maschine präzise und dynamisch drehzahlregelbar ist. Des weiteren wird durch den sanften Einlauf der Drehzahl der elektrischen Maschine auf die Zieldrehzahl bzw. die Synchrondrehzahl des neuen Ganges ein besonders hoher Schaltkomfort gewährleistet, da die Änderung des dynamischen Moments des Verbrennungsmotors und der elektrischen Maschine, verursacht durch das Massenträgheitsmoment der Motoren, in dem Augenblick, in dem das zuschaltende Schaltelement ins Haften kommt, nur eine geringe Änderung erfährt. Ein weiterer Vorteil des erfindungsgemäßen Verfahrens besteht darin, dass der Ablauf der Lastschaltung einfacher umzusetzen und abzustimmen ist, verglichen mit einer Lastschaltung mit einem Momenteingriff gemäß dem Stand der Technik

Die Erfindung wird im folgenden anhand der beigefügten Figuren beispielhaft näher erläutert. Es zeigen:
- Figur 1:: Eine beispielhafte, schematische und vereinfachte Darstellung des Antriebsstrangs eines parallelen Hybridfahrzeugs; und
- Figur 2:: Ein Diagramm, welches den Verlauf der Drehzahl des Elektromotors bei einer erfindungsgemäßen Zug-Hochschaltung veranschaulicht.

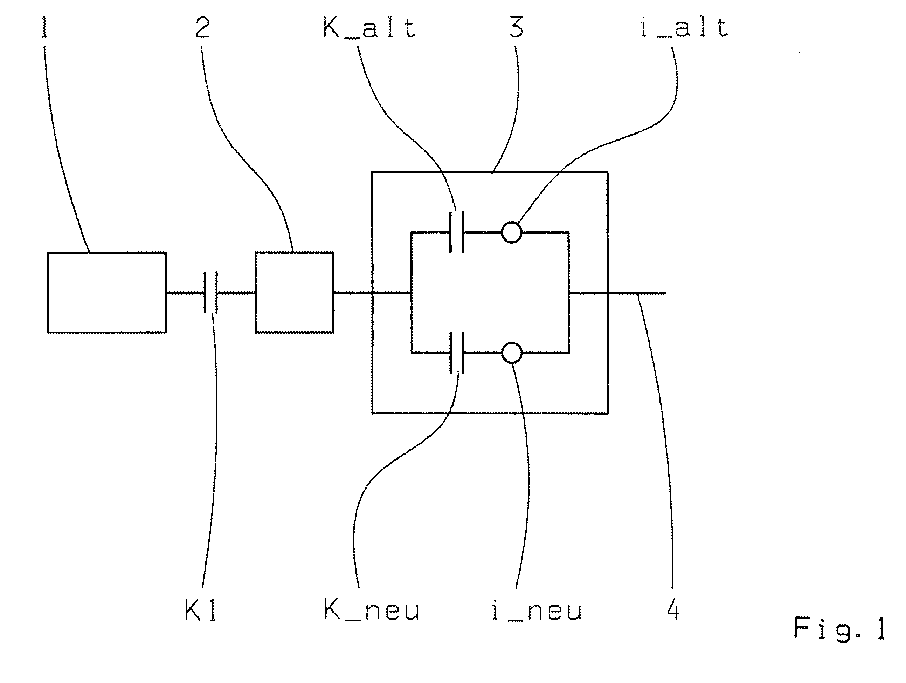

Bezugnehmend auf Figur 1 umfasst der Antriebsstrang eines parallelen Hybridfahrzeugs einen Verbrennungsmotor 1 und zumindest eine elektrische Maschine 2, die in dieser Reihenfolge hintereinander geschaltet sind, wobei der Verbrennungsmotor 1 durch Öffnen einer Kupplung K1 von der elektrischen Maschine 2 und somit vom Antriebsstrang abkoppelbar ist. Zur Durchführung des hier vorgestellten Verfahrens ist die Kupplung K1 geschlossen, wodurch die beiden Motoren miteinander gekoppelt sind, so dass sich das Moment beider Motoren 1, 2 addiert.

In Kraftflussrichtung nach der elektrischen Maschine 2 ist ein Lastschaltgetriebe 3 angeordnet, welches bei der gezeigten beispielhaften vereinfachten Darstellung, die der Veranschaulichung des erfindungsgemäßen Verfahrens dient, eine zuschaltende Kupplung K_neu für den neuen einzulegenden Gang und eine abschaltende Kupplung K_alt für den alten Gang umfasst, wobei jeder Kupplung bzw. jedem Gang eine Übersetzungsstufe mit der Übersetzung i_neu bzw. i_alt zugeordnet ist. In Figur 1 ist der Abtrieb des Lastschaltgetriebes 3 mit dem Bezugszeichen 4 versehen.

Im folgenden wird das erfindungsgemäße Verfahren anhand einer Zughochschaltung von i_alt nach i_neu beschrieben.

Gemäß der Erfindung beginnt die Schaltung wie eine konventionelle Schaltung; es wird zunächst die Übertragungsfähigkeit der zuschaltenden Kupplung K_neu zur Lastübernahme erhöht und gleichzeitig die Übertragungsfähigkeit der abschaltenden Kupplung K_alt verringert. Nach erfolgter Lastübernahme durch die Kupplung K_neu wird die elektrische Maschine 2 vom momentgeführten Modus in einem Drehzahlregelmodus überführt und es wird eine Drehzahlanpassung der elektrischen Maschine 2 (und damit auch des mit der elektrischen Maschine 2 gekoppelten Verbrennungsmotors 1) in diesem Drehzahlregelmodus vorgenommen, wobei die elektrische Maschine 2 drehzahlgeregelt auf die Zieldrehzahl bzw. die Synchrondrehzahl des neuen Ganges geführt wird; gleichzeitig wird das abschaltende Schaltelement K_alt vollständig geöffnet.

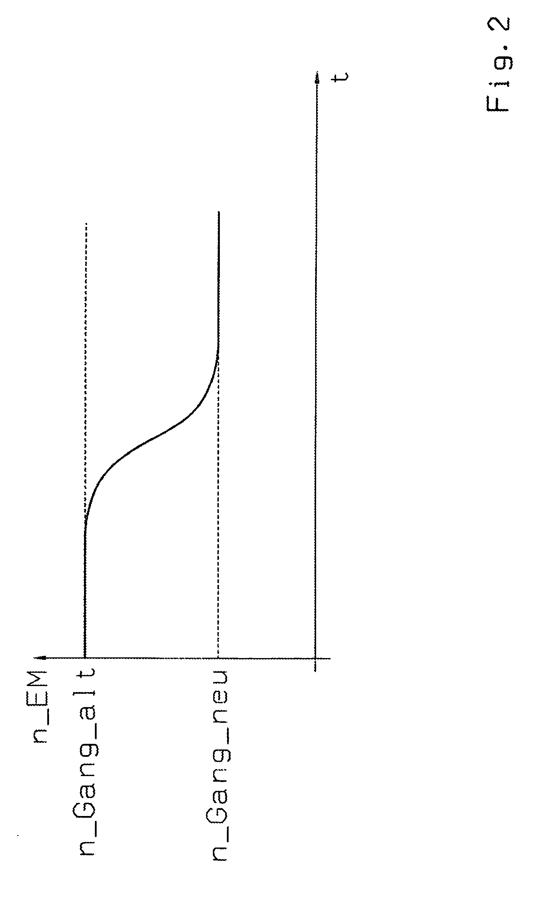

In vorteilhafter Weise ist der Drehzahlverlauf bei der Drehzahlanpassung der elektrischen Maschine 2 im Drehzahlregelmodus derart gestaltet, dass die Drehzahl mit einem geringen Gradient auf die Zieldrehzahl bzw. die Anschlussdrehzahl des neuen Ganges einläuft, wobei die zur elektrischen Maschine 1 hin wirkenden Momente der Kupplungen K_alt, K_neu und des Verbrennungsmotors 1 als Vorsteuerung für die Drehzahlregelung dienen. Ein beispielhafter Verlauf der Solldrehzahl der elektrischen Maschine 2 n_EM als Funktion der Zeit t ist Gegenstand der Figur 2. Hierbei bezeichnet n_Gang_alt die Drehzahl der elektrischen Maschine 2 bei eingelegtem alten Gang (d.h. bei geschlossener Kupplung K_alt); n_Gang_neu ist die Synchrondrehzahl des neuen Ganges bei der durchzuführenden Lastschaltung.

Wenn anschließend die Drehzahl die Synchrondrehzahl n_Gang_neu erreicht, wird die elektrische Maschine 2 in den momentengeregelten Modus überführt und die Kupplung K_neu vollständig geschlossen, so dass der Verbrennungsmotor 1 und die elektrische Maschine 2 über den neuen Getriebegang mit dem Abtrieb des Getriebes gekoppelt sind.

Bei einer Zug-Rückschaltung wird zunächst die Übertragungsfähigkeit der abschaltenden Kupplung K_alt reduziert, wobei sobald Schlupf an K_alt erkannt wird, die elektrische Maschine 2 vom momentgeführten Modus in einen Drehzahlregelmodus überführt wird. Anschließend wird die Drehzahl der elektrischen Maschine 2 erhöht bis auf eine Drehzahl oberhalb der Synchrondrehzahl an der zuschaltenden Kupplung K_neu, da an K_neu eine positive Drehzahldifferenz erforderlich ist, damit diese Kupplung ein Zug-Moment übertragen kann.

In einem nächsten Schritt wird die Übertragungsfähigkeit der zuschaltenden Kupplung K_neu erhöht und die Übertragungsfähigkeit der abschaltenden Kupplung K_alt weiter verringert, so dass eine kontinuierliche Lastübernahme durch K_neu realisiert wird. Nach erfolgter Lastübernahme durch die zuschaltende Kupplung K_neu wird die abschaltende Kupplung K_alt ganz geöffnet und die Drehzahl der elektrischen Maschine auf die Synchrondrehzahl an der zuschaltenden Kupplung K_neu geführt. Wenn die Synchrondrehzahl erreicht wird, wird die elektrische Maschine wieder in den momentgeregelten Modus überführt und die zuschaltende Kupplung K_neu ganz geschlossen.

Für den Fall einer Schub-Rückschaltung wird zunächst zur Lastübernahme die Übertragungsfähigkeit der zuschaltenden Kupplung K_neu erhöht, wobei gleichzeitig die Übertragungsfähigkeit der abschaltenden Kupplung K_alt verringert wird. Nach der Lastübernahme durch K_neu wird die elektrische Maschine vom momentgeführten Modus in einen Drehzahlregelmodus überführt und die abschaltende Kupplung K_alt ganz geöffnet. Anschließend wird die elektrische Maschine drehzahlgeregelt auf die Synchrondrehzahl geführt, wobei vorzugsweise die Drehzahl mit einem geringen Gradienten auf die Zieldrehzahl einläuft. Wenn die Synchrondrehzahl erreicht wird, wird die elektrische Maschine wieder in den momentgeregelten Modus überführt und die zuschaltende Kupplung K_neu ganz geschlossen.

Eine Schub-Hochschaltung und eine Zug-Rückschaltung sind im prinzipiellen Ablauf ähnlich, mit dem Unterschied, dass die Vorzeichen der Drehmomente verschieden sind und der Drehzahlverlauf in die andere Richtung geht. Demnach wird bei einer Schub-Hochschaltung zunächst die Übertragungsfähigkeit der abschaltenden Kupplung K_alt kontinuierlich verringert, wobei sobald Schlupf an K_alt erkannt wird, die elektrische Maschine vom momentgeführten Modus in einen Drehzahlregelmodus überführt wird, in dem die Drehzahl bis auf eine Drehzahl unterhalb der Synchrondrehzahl am zuschaltenden Schaltelement K_neu erniedrigt wird, da eine negative Drehzahldifferenz erforderlich ist, damit das zuschaltende Schaltelement Moment übertragen kann. Anschließend wird die Übertragungsfähigkeit des zuschaltenden Schaltelementes K_neu erhöht und die Übertragungsfähigkeit des abschaltenden Schaltelementes K_alt verringert, so dass eine kontinuierliche Lastübernahme durch K_neu realisiert wird.

Nach erfolgter Lastübernahme durch die zuschaltende Kupplung K_neu wird die abschaltende Kupplung K_alt ganz geöffnet und die Drehzahl der elektrischen Maschine im Drehzahlregelmodus auf die Synchrondrehzahl an der zuschaltenden Kupplung K_neu geführt. Wenn die Synchrondrehzahl erreicht wird, wird die elektrische Maschine wieder in den momentgeregelten Modus überführt und die zuschaltende Kupplung K_neu ganz geschlossen

Da gemäß dem erfindungsgemäßen Verfahren am Verbrennungsmotor in der Regel kein dynamischer Eingriff erfolgt, entstehen in vorteilhafter Weise weniger Abgasemissionen. Des weiteren kann bei Hochschaltungen die durch die Absenkung der Drehzahl frei werdende kinetische Energie der Drehmassen von Verbrennungsmotor und elektrischer Maschine durch den generatorischen Betrieb der elektrischen Maschine zurückgewonnen werden.

### Bezugszeichen

- 1: Verbrennungsmotor
- 2: elektrische Maschine
- 3: Lastschaltgetriebe
- 4: Abtrieb des Lastschaltgetriebes

- K1: Kupplung
- K_neu: Kupplung
- K_alt: Kupplung
- n_EM: Drehzahl der elektrischen Maschine
- n_Gang_alt: Drehzahl der elektrischen Maschine bei eingelegtem alten Gang
- n_Gang_neu: Synchrondrehzahl des neuen Ganges
- i_alt: Übersetzung
- i_neu: Übersetzung

## Patentansprüche

1. Verfahren zur Durchführung einer Lastschaltung bei parallelen Hybridfahrzeugen im Hybridbetrieb, wobei die zur Synchronisierung auf einen zu schaltenden Gang erforderliche Drehzahlanpassung einer elektrischen Maschine (2) und eines Verbrennungsmotors (1) durch eine Drehzahlanpassung der elektrischen Maschine (2) in einem Drehzahlregelmodus durchgeführt wird, wobei wenn eine Drehzahl (n_EM) der elektrischen Maschine (2) eine Zieldrehzahl bzw. eine Synchrondrehzahl (n_Gang_neu) des zu schaltenden Ganges erreicht, die elektrische Maschine (2) in einen momentengeregelten Modus überführt wird und ein zuschaltendes Schaltelement (K_neu) vollständig geschlossen wird, **dadurch gekennzeichnet, dass**
für den Fall einer Zug-Hochschaltung eine Übertragungsfähigkeit der zuschaltenden Kupplung (K_neu) zur Lastübernahme erhöht und gleichzeitig die Übertragungsfähigkeit einer abschaltenden Kupplung (K_alt) verringert wird, wobei nach erfolgter Lastübernahme durch das zuschaltende Schaltelement (K_neu) die elektrische Maschine (2) in einen Drehzahlregelmodus überführt wird und eine Drehzahlanpassung der elektrischen Maschine (2) durchgeführt wird, um die Synchrondrehzahl des zu schaltenden Ganges zu erreichen, so dass die elektrische Maschine (2) drehzahlgeregelt auf die Zieldrehzahl bzw. die Synchrondrehzahl des zu Schaltenden Ganges geführt wird, wobei gleichzeitig das abschaltende Schaltelement (K_alt) vollständig geöffnet wird,
wobei für den Fall einer Zug-Rückschaltung die Übertragungsfähigkeit des abschaltenden Schaltelementes (K_alt) verringert wird, wobei sobald Schlupf am abschaltenden Schaltelement (K_alt) erkannt wird, die elektrische Maschine (2) vom momentgeführten Modus in einen Drehzahlregelmodus überführt wird, wobei anschließend die Drehzahl der elektrischen Maschine (2) bis auf eine Drehzahl oberhalb der Synchrondrehzahl am zuschaltenden Schaltelement (K_neu) erhöht wird, wobei in einem nächsten Schritt die Übertragungsfähigkeit des zuschaltenden Schaltelementes (K_neu) erhöht und die Übertragungsfähigkeit des abschaltenden Schaltelementes (K_alt) weiter verringert wird, so dass eine kontinuierliche Lastübernahme durch das zuschaltende Schaltelement (K_neu) realisiert wird, wobei nach erfolgter Lastübernahme durch das zuschaltende Schaltelement (K_neu) das abschaltende Schaltelement (K_alt) ganz geöffnet und die Drehzahl der elektrischen Maschine (2) auf die Synchrondrehzahl am zuschaltenden Schaltelement (K_neu) geführt wird, wobei für den Fall einer Schub-Rückschaltung die Übertragungsfähigkeit des zuschaltende Schaltelementes (K_neu) erhöht wird, wobei gleichzeitig die Übertragungsfähigkeit der abschaltenden Kupplung (K_alt) verringert wird, wobei nach der Lastübernahme durch das zuschaltende Schaltelement (K_neu) die elektrische Maschine (2) vom momentgeführten Modus in einen Drehzahlregelmodus überführt und das abschaltende Schaltelement (K_alt) ganz geöffnet wird und wobei anschließend die elektrische Maschine (2) drehzahlgeregelt auf die Synchrondrehzahl geführt wird, wobei gleichzeitig das abschaltende Schaltelement (K_alt) vollständig geöffnet wird und
wobei für den Fall einer Schub-Hochschaltung zunächst die Übertragungsfähigkeit des abschaltenden Schaltelementes (K_alt) kontinuierlich verringert wird, wobei sobald am abschaltenden Schaltelement (K_alt) Schlupf erkannt wird, die elektrische Maschine (2) vom momentgeführten Modus in einen Drehzahlregelmodus überführt wird, in dem die Drehzahl bis auf eine Drehzahl unterhalb der Synchrondrehzahl am zuschaltenden Schaltelement (K_neu) erniedrigt wird, wobei anschließend die Übertragungsfähigkeit des zuschaltenden Schaltelementes (K_neu) erhöht und die Übertragungsfähigkeit des abschaltenden Schaltelementes (K_alt) verringert wird, so dass eine kontinuierliche Lastübernahme durch das zuschaltenden Schaltelement (K_neu) realisiert wird und wobei nach erfolgter Lastübernahme durch das zuschaltende Schaltelement (K_neu) das abschaltende Schaltelement (K_alt) ganz geöffnet wird und die Drehzahl der elektrischen Maschine (2) im Drehzahlregelmodus auf die Synchrondrehzahl am zuschaltenden Schaltelement (K_neu) geführt wird.

2. Verfahren zur Durchführung einer Lastschaltung nach Anspruch 1, **dadurch gekennzeichnet, dass** die zur elektrischen Maschine (2) hin wirkenden Momente der Schaltelemente (K_alt, K_neu) und des Verbrennungsmotors (1) als Vorsteuerung für die Drehzahlregelung an der elektrischen Maschine (2) dienen.

3. Verfahren zur Durchführung einer Lastschaltung nach Anspruch 1 oder 2, **dadurch gekennzeichnet, dass** am Verbrennungsmotor (1) nur dann ein Momenteingriff durchgeführt wird, wenn die elektrische Maschine (2) nicht genug Moment aufbringen kann, um der gewünschten Drehzahländerung bzw. dem Solldrehzahlverlauf zu folgen.

## Claims

1. Method for carrying out a load shift in parallel hybrid vehicles during hybrid operation, wherein the adjustment in rotational speed of an electric machine (2) and of an internal combustion engine (1) required for synchronization to a gear to be shifted is carried out by an adjustment in rotational speed of the electric machine (2) in a rotational speed regulation mode, wherein if a rotational speed (n_EM) of the electric machine (2) reaches a setpoint rotational speed or a synchronous rotational speed (n_gear_new) of the gear to be shifted, the electric machine (2) is transferred into a moment-regulated mode and a shift element to be activated (K_new) is fully closed, **characterized in that**,
in the event of a traction upshift, a transmission capacity of the clutch to be activated (K_new) for load take-up is increased and at the same time the transmission capacity of a clutch to be deactivated (K_old) is reduced, wherein, once the load has been taken up by the shift element to be activated (K_new), the electric machine (2) is transferred into a rotational speed regulation mode and an adjustment in rotational speed of the electric machine (2) is carried out in order to reach the synchronous rotational speed of the gear to be shifted so that the electric machine (2) is moved to the setpoint rotational speed or the synchronous rotational speed of the gear to be shifted in a rotational speed-regulated manner, wherein the shift element to be deactivated (K_old) is simultaneously fully opened,
wherein, in the event of a traction downshift, the transmission capacity of the shift element to be deactivated (K_old) is reduced, wherein as soon as slip is detected at the shift element to be deactivated (K_old), the electric machine (2) is transferred from the moment-guided mode into a rotational speed regulation mode, wherein subsequently the rotational speed of the electric machine (2) is increased to a rotational speed above the synchronous rotational speed at the shift element to be activated (K_new), wherein in the next step the transmission capacity of the shift element to be activated (K_new) is increased and the transmission capacity of the shift element to be deactivated (K_old) is further reduced so that a continuous load take-up is achieved by the shift element to be activated (K_new), wherein, once the load has been taken up by the shift element to be activated (K_new), the shift element to be deactivated (K_old) is fully opened and the rotational speed of the electric machine (2) is moved to the synchronous rotational speed at the shift element to be activated (K_new),
wherein, in the event of an overrun downshift, the transmission capacity of the shift element to be activated (K_new) is increased, wherein the transmission capacity of the clutch to be deactivated (K_old) is simultaneously reduced, wherein after the take-up of load by the shift element to be activated (K_new) the electric machine (2) is transferred from the moment-guided mode into a rotational speed regulation mode and the shift element to be deactivated (K_old) is fully opened and wherein subsequently the electric machine (2) is moved to the synchronous rotational speed in a rotational speed-regulated manner, wherein simultaneously the shift element to be deactivated (K_old) is fully opened and wherein, in the event of an overrun upshift, initially the transmission capacity of the shift element to be deactivated (K_old) is continuously reduced, wherein as soon as slip is detected at the shift element to be deactivated (K_old), the electric machine (2) is moved from the moment-guided mode into a rotational speed regulation mode in which the rotational speed is reduced to a rotational speed below the synchronous rotational speed at the shift element to be activated (K_new), wherein subsequently the transmission capacity of the shift element to be activated (K_new) is increased and the transmission capacity of the shift element to be deactivated (K_old) is reduced so that a continuous take-up of load is achieved by the shift element to be activated (K_new) and wherein after the take-up of load by the shift element to be activated (K_new) the shift element to be deactivated (K_old) is fully opened and the rotational speed of the electric machine (2) is moved in the rotational speed regulation mode to the synchronous rotational speed at the shift element to be activated (K_new).

2. Method for carrying out a load shift according to Claim 1, **characterized in that** the moments of the shift elements (K_old, K_new) and of the internal combustion engine (1) acting towards the electric machine (2) serve as a pre-control for the rotational speed regulation at the electric machine (2).

3. Method for carrying out a load shift according to Claim 1 or 2, **characterized in that** a moment intervention is only carried out at the internal combustion engine (1) if the electric machine (2) cannot apply sufficient moment in order to follow the desired change in rotational speed and/or the setpoint rotational speed profile.

## Revendications

1. Procédé pour effectuer un changement de vitesse en charge lors du fonctionnement hybride pour des véhicules hybrides parallèles, l'adaptation de la vitesse de rotation d'un moteur électrique (2) et d'un moteur à combustion interne (1) nécessaire à la synchronisation sur un rapport à engager étant réalisée par le biais d'une adaptation de la vitesse de rotation du moteur électrique (2) dans un mode de réglage de vitesse de rotation, sachant que lorsque la vitesse de rotation (n_EM) du moteur électrique (2) atteint une vitesse de rotation cible et/ou une vitesse de rotation synchrone (n_Gang_neu) du rapport à engager, le moteur électrique (2) est passé en mode de couple réglé et un élément de changement de vitesse s'engageant (K_neu) est entièrement fermé, **caractérisé en ce que** :
pour le cas d'un changement de vitesse vers une vitesse supérieure par traction, une capacité de transmission de l'accouplement s'engageant (K_neu) augmente pour la prise en charge de la charge en même temps que la capacité de transmission d'un accouplement se désengageant (K_alt) est réduite ;
après la prise en charge réussie de la charge par l'élément de changement de vitesse s'engageant (K_neu), le moteur électrique (2) étant passé dans un mode de réglage de vitesse de rotation et une adaptation de la vitesse de rotation du moteur électrique (2) étant réalisée pour atteindre la vitesse de rotation synchrone du rapport à engager, de sorte que le moteur électrique (2) est amené vitesse de rotation réglée à la vitesse de rotation cible et/ou à la vitesse de rotation synchrone du rapport à engager, l'élément de changement de vitesse se désengageant (K_alt) étant simultanément entièrement ouvert ;
pour le cas d'un changement de vitesse vers une vitesse inférieure par traction, la capacité de transmission de l'élément de changement de vitesse se désengageant (K_alt) étant réduite, sachant que dès qu'un patinage est détecté au niveau de l'élément de changement de vitesse se désengageant (K_alt), le moteur électrique (2) est passé du mode de guidage par le couple dans un mode de réglage de vitesse de rotation, la vitesse de rotation du moteur électrique (2) étant ensuite augmentée jusqu'à une vitesse de rotation supérieure à la vitesse de rotation synchrone au niveau de l'élément de changement de vitesse s'engageant (K_neu), sachant que lors d'une étape suivante, la capacité de transmission de l'élément de changement de vitesse s'engageant (K_neu) est augmentée et que la capacité de transmission de l'élément de changement de vitesse se désengageant (K_alt) est davantage réduite, de façon à obtenir une prise en charge continue de la charge par l'élément de changement de vitesse s'engageant (K_neu), sachant qu'après la prise en charge réussie de la charge par l'élément de changement de vitesse s'engageant (K_neu), l'élément de changement de vitesse se désengageant (K_alt) est entièrement ouvert et que la vitesse de rotation du moteur électrique (2) est passée à la vitesse de rotation synchrone au niveau de l'élément de changement de vitesse s'engageant (K_neu) ;
pour le cas d'un changement de vitesse vers une vitesse inférieure par poussée, la capacité de transmission de l'élément de changement de vitesse s'engageant (K_neu) étant augmentée, la capacité de transmission de l'accouplement se désengageant (K_alt) étant simultanément réduite, sachant qu'après la prise en charge de la charge par l'élément de changement de vitesse s'engageant (K_neu), le moteur électrique (2) est passé du mode de guidage par le couple dans un mode de réglage de vitesse de rotation et que l'élément de changement de vitesse se désengageant (K_alt) est entièrement ouvert et sachant que le moteur électrique (2) est ensuite amené vitesse de rotation réglée à la vitesse de rotation synchrone, l'élément de changement de vitesse se désengageant (K_alt) étant simultanément entièrement ouvert ; et
pour le cas d'un changement de vitesse vers une vitesse supérieure par poussée, la capacité de transmission de l'élément de changement de vitesse se désengageant (K_alt) étant d'abord réduite en continu, sachant que dès qu'un patinage est détecté au niveau de l'élément de changement de vitesse se désengageant (K_alt), le moteur électrique (2) est passé du mode de guidage par le couple dans un mode de réglage de vitesse de rotation dans lequel la vitesse de rotation est réduite jusqu'à une vitesse de rotation inférieure à la vitesse de rotation synchrone au niveau de l'élément de changement de vitesse s'engageant (K_neu), sachant que la capacité de transmission de l'élément de changement de vitesse s'engageant (K_neu) est ensuite augmentée et que la capacité de transmission de l'élément de changement de vitesse se désengageant (K_alt) est réduite, de façon à réaliser une prise en charge continue de la charge par l'élément de changement de vitesse s'engageant (K_neu) et sachant qu'après la prise en charge réussie de la charge par l'élément de changement de vitesse s'engageant (K_neu), l'élément de changement de vitesse se désengageant (K_alt) est entièrement ouvert et que la vitesse de rotation du moteur électrique (2) est passée dans le mode de réglage de vitesse de rotation à la vitesse de rotation synchrone au niveau de l'élément de changement de vitesse s'engageant (K_neu).

2. Procédé pour effectuer un changement de vitesse en charge selon la revendication 1, **caractérisé en ce que** les couples des éléments de changement de vitesse (K_alt, K_neu) et du moteur à combustion interne (1) agissant en direction du moteur électrique (2) servent de précommande pour le réglage de la vitesse de rotation au niveau du moteur électrique (2).

3. Procédé pour effectuer un changement de vitesse en charge selon la revendication 1 ou 2, **caractérisé en ce que** qu'une intervention sur le couple n'est réalisée au niveau du moteur à combustion interne (1) que lorsque le moteur électrique (2) ne peut pas appliquer un couple suffisant pour atteindre la variation de vitesse de rotation souhaitée et/ou suivre la trajectoire de vitesse de rotation théorique.
